Europäisches Patentamt

European Patent Office

Office européen des brevets

(11) Numéro de publication: **0 375 581**
**A1**

## (12) DEMANDE DE BREVET EUROPEEN

(21) Numéro de dépôt: 89460045.1

(22) Date de dépôt: 18.12.89

(51) Int. Cl.⁵: **F16L 37/08, F16L 37/22**

(30) Priorité: 19.12.88 FR 8817048

(43) Date de publication de la demande:
27.06.90 Bulletin 90/26

(84) Etats contractants désignés:
CH DE ES FR GB IT LI SE

(71) Demandeur: **LEGRIS SA**
**74 rue de Paris**
**F-35014 Rennes(FR)**

(72) Inventeur: **Belisaire, Daniel**
**2 avenue de la Hublais**
**F-35510 Cesson-Sevigne(FR)**
Inventeur: **Serot, Pierre**
**64 bis avenue Paul Langevin**
**F-92260 Fontenay Aux Roses(FR)**

(74) Mandataire: **Dubreuil, Annie**
**Cabinet DUBREUIL Le Suffren 23 rue des**
**Peupliers**
**F-56100 Lorient(FR)**

(54) **Coupleur automatique pour circuit de fluide sous pression.**

(57) Le coupleur de l'invention est du type comprenant un clapet (19) coulissant dans un corps (1), et des moyens pour équilibrer la pression de fluide amont sur le clapet. La partie aval de celui-ci forme une douille pour recevoir et verrouiller de façon étanche un embout (8).

Le coupleur comporte un moyen de verrouillage du clapet à deux positions : l'une dans laquelle le clapet est ouvert, et l'autre dans laquelle il est fermé et la douille communique avec l'atmosphère, l'embout (8) étant toujours verrouillé. La libération du clapet à partir de la première position engage un moyen de verrouillage en position intermédiaire dont la libération assure par le fait même le verrouillage dans la seconde position.

Le coupleur de l'invention permet d'éviter de façon sûre le phénomène de "coup de fouet" produit au désaccouplement par la pression aval.

FIG. 2

# COUPLEUR AUTOMATIQUE POUR CIRCUIT DE FLUIDE SOUS PRESSION

La présente invention concerne des coupleurs automatiques utilisés dans des circuits de fluide sous pression, par exemple des réseaux de distribution d'air comprimé dans des usines ou des ateliers.

Les coupleurs automatiques sont généralement montés aux extrémités de tuyaux reliés à une conduite de distribution de fluide sous pression. Ils permettent de raccorder des tuyaux munis d'embouts qui desservent des outils pneumatiques, par exemple. A l'état de repos, les coupleurs sont fermés par des clapets. Ceux-ci sont entraînés vers la position d'ouverture par l'embout lors de son insertion dans le coupleur, ladite position d'ouverture n'étant atteinte qu'une fois que ledit embout est verrouillé de façon étanche dans le coupleur. Le désaccouplement s'effectue au moyen d'un bouton poussoir ou d'une bague coulissante sur le coupleur, et la fermeture du clapet a lieu avant le déverrouillage de l'embout.

En pratique, de tels coupleurs automatiques trouvent des applications dans des circuits où la pression du fluide peut être élevée. Dans ce cas, si le clapet est soumis à la pression, l'accouplement par insertion d'un embout dans le coupleur avec poussée sur le clapet pour l'ouverture peut s'avérer difficile, voire impossible.

D'autre part, lorsque l'embout ou le coupleur, ou les deux, sont montés à l'extrémité d'un tuyau souple, il se produit ce qu'on appelle un "coup de fouet" lors de la déconnexion, provoqué par la libération de la pression dans le tuyau aval. Même pour des pressions peu élevées, ce phénomène crée un risque d'accident pour l'utilisateur.

Un coupleur automatique à effort d'accouplement réduit et pourvu d'un dispositif anti "coup de fouet" est décrit dans la demande de brevet européen EP-A-0 100 090. Ce coupleur comporte un manchon dans lequel est monté coulissant un clapet. Le fluide arrive à la périphérie dudit clapet si bien qu'il n'est pas soumis à une poussée axiale résultant de la pression et qu'il faut juste vaincre l'action d'un ressort pour le déplacer. Lors de l'insertion de l'embout d'un tuyau aval dans le coupleur, ledit embout rentre dans la partie aval du clapet qui forme une douille et, avant d'arriver en butée, une connexion étanche est établie entre eux par un joint annulaire monté dans la face interne du clapet. Pour le passage de l'embout dans le joint annulaire, le clapet est bloqué dans le manchon par des premières billes engagées dans des trous dudit clapet. Lorsque l'embout est en butée dans le clapet, un creux à sa périphérie est en correspondance avec lesdites billes, de sorte que sous l'effet de la poussée d'insertion de l'embout, elles libèrent le clapet par rapport au manchon, lui permettant alors de reculer dans ce dernier. Dès que le mouvement de recul est entamé, les billes verrouillent l'embout dans le clapet, bien avant que celui-ci arrive en position d'ouverture. Quand cette position est atteinte, une série de secondes billes dans le manchon bloquent l'extrémité aval du clapet et sont retenues en position de blocage au moyen d'une bague sur le manchon.

Pour déconnecter, par coulissement de la bague, on déverrouille les billes de blocage du clapet, de sorte que celui-ci avance d'amont en aval dans le manchon, sous l'action d'un ressort, et ferme le coupleur. Une position intermédiaire est atteinte, dans laquelle la force sur l'embout résultant de la pression dans le tuyau aval est mise à profit pour établir un verrouillage par coincement desdites premières billes entre un épaulement incliné sur l'embout et un épaulement incliné sur le manchon. Cette situation est illustrée à la Fig. 4 du brevet. Dans cette position, le fluide dans le tuyau aval s'échappe par un évent, et dès que la pression aval, et par conséquent la force de coincement des billes, passent au-dessous d'un certain seuil, lesdites billes quittent leur position de coincement et libèrent le clapet du manchon, de sorte que le clapet peut atteindre sa position de repos et qu'on peut alors en extraire l'embout.

Bien que satisfaisant pour des pressions de fonctionnement élevées, le coupleur décrit dans ce document n'est pas sûr pour des pressions moyennes ou faibles du fait que la force s'exerçant sur l'embout n'est pas toujours suffisante pour le coincement des billes. Par conséquent, en cas de pressions peu élevées, l'utilisateur n'est pas complètement à l'abri du risque de "coup de fouet".

Un objet de l'invention consiste à prévoir un coupleur automatique du type décrit ci-dessus qui n'en présente pas les inconvénients et qui soit d'une fabrication simple et économique.

Selon l'invention, dans un coupleur automatique dont le corps renferme un clapet coulissant, la pression étant équilibrée sur ledit clapet dans la direction axiale, de sorte que lorsque le clapet se déplace dans le corps du coupleur, il n'est sollicité que par un ressort de rappel, la partie aval du clapet formant une douille de réception d'un embout monté sur un tuyau à raccorder, pourvue d'un moyen de verrouillage étanche de ce dernier, il est prévu un moyen de verrouillage du clapet par rapport au corps du coupleur à deux positions :
- une première position ou position d'accouplement dans laquelle le clapet est ouvert, et
- une seconde position dans laquelle le clapet est fermé, l'embout est verrouillé dans le clapet, et la douille de réception de l'embout du clapet est en communication avec l'atmosphère,

ledit moyen de verrouillage s'escamotant automatiquement, puis bloquant, sollicité par un ressort, le clapet en position d'ouverture lors de l'insertion de l'embout dans le coupleur, un moyen de libération dudit moyen de verrouillage étant aussi prévu, qui, lorsqu'il est actionné pour libérer le clapet de la première position, rend opérationnel un moyen de verrouillage dans une position intermédiaire entre lesdites première et seconde positions, jusqu'à ce que ledit moyen de libération soit relâché et permette au moyen de verrouillage en position intermédiaire de s'escamoter en assurant par le fait même le verrouillage dans la seconde position, le moyen de libération devant être actionné une seconde fois pour que le clapet, sollicité par son ressort, puisse continuer son déplacement dans le corps du coupleur vers sa position de repos, l'embout pouvant alors être déverrouillé du clapet.

Les caractéristiques de l'invention mentionnées ci-dessus, ainsi que d'autres, apparaîtront à la lecture de la description suivante d'exemples de réalisation, faite en relation avec les dessins joints, parmi lesquels :

la Fig. 1 est une vue en coupe axiale d'un coupleur automatique selon l'invention,

les Figs. 2 à 6 sont des vues en coupe axiale du coupleur de la Fig. 1, dans lequel est engagé un embout mâle monté sur un tuyau aval, et représentant les phases de fonctionnement principales du coupleur,

la Fig. 7 est une vue partielle de la partie d'extrémité d'un coupleur destiné à recevoir un embout différent de celui qui est représenté aux Figs. 2 à 6, et

les Figs. 8 et 9 sont des vues en coupe axiale de coupleurs pourvus de moyens d'équilibrage de la pression sur le clapet différents de celui des coupleurs des Figs. 2 à 7.

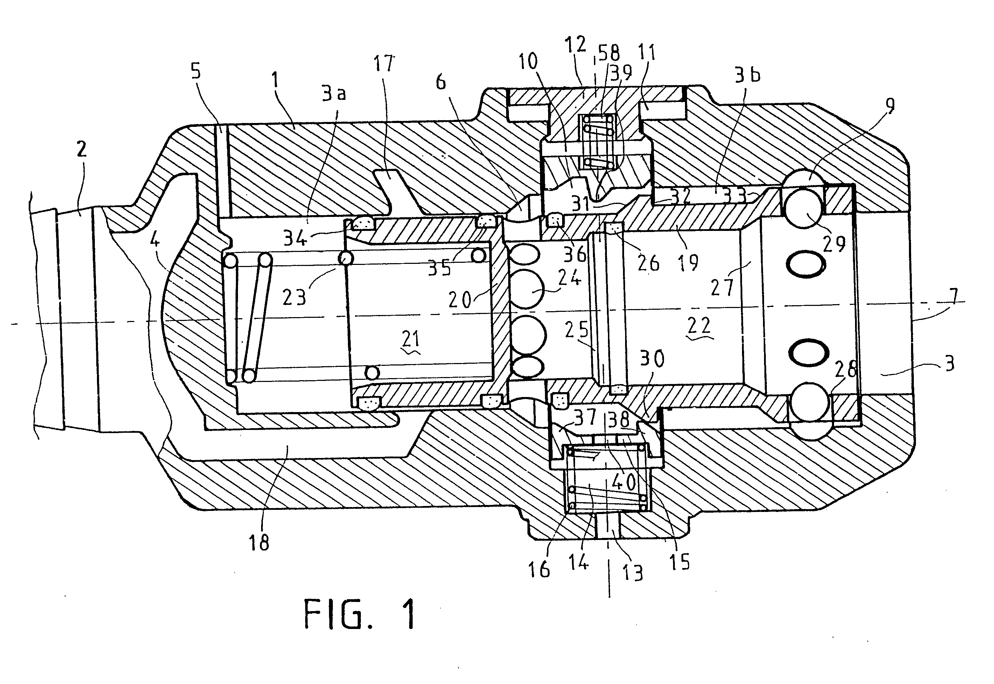

Le coupleur représenté aux Figs. 1 à 6 comprend un corps 1 de configuration générale cylindrique pourvu à son extrémité amont d'un moyen de raccordement 2 à un tuyau. Le corps 1 forme une chambre interne 3 à symétrie axiale, ouverte en aval et fermée par une cloison 4 à son extrémité amont. Près de cette extrémité, la chambre 3 est ouverte à l'air libre par un évent 5.

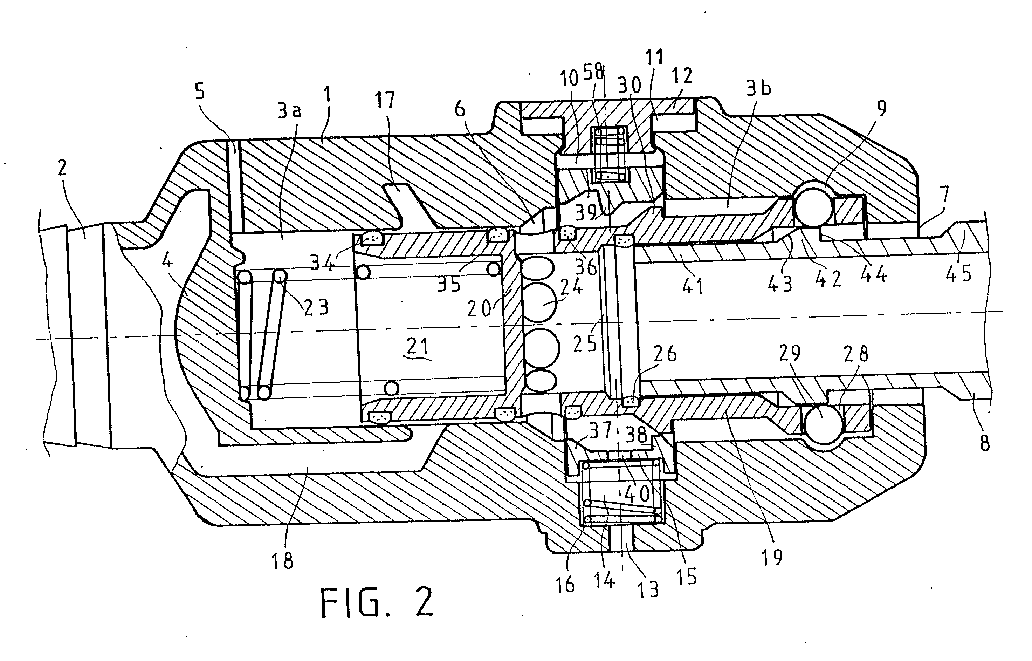

A partir de la cloison 4, la chambre 3 comprend un premier alésage 3a et un second alésage 3b de plus grand diamètre, définissant un épaulement 6. L'ouverture 7 à l'extrémité aval de la chambre 3 est resserrée, son diamètre étant très légèrement supérieur au plus grand diamètre de la partie d'un embout 8, Figs. 2 à 6, devant être reçue dans le coupleur. D'autre part, près de l'ouverture 7, la face interne du corps 1 présente une gorge périphérique 9 de profil arrondi.

Dans l'alésage 3b de la chambre 3, à proximité de l'épaulement 6, la face interne du corps 1 présente une gorge interne périphérique profonde 10, ouverte vers l'extérieur par un puits 11 de réception d'un bouton poussoir 12, et par un évent 13 au fond d'un puits 14 opposé au puits 11. La gorge 10 est prévue pour recevoir une bague de verrouillage 15 actionnable au moyen du bouton poussoir 12 et rappelée par un ressort hélicoïdal 16 logé dans le puits 14.

Une chambre annulaire périphérique 17, communiquant avec la partie de raccordement 2 par une pluralité de conduites périphériques 18, est ouverte sur la partie 3a de la chambre 3.

Dans la chambre 3, se trouve un clapet 19 de configuration sensiblement cylindrique comportant une cloison interne intermédiaire 20. La cloison 20 sépare un alésage amont 21 et une chambre aval 22 en forme de douille. L'extrémité de l'alésag 21 est ouverte, de manière à loger, entre la cloison 4 du corps 1 et la cloison 20 un ressort hélicoïdal 23. La chambre 22 est ouverte à son extrémité aval, lé diamètre de l'ouverture étant sensiblement le même que celui de l'ouverture 7 du corps 1. A partir de la cloison 20, la chambre 22 comporte des ouvertures circulaires 24 disposées annulairement, un épaulement interne 25, une gorge annulaire contenant un joint annulaire 26, un épaulement 27 et une pluralité d'ouvertures circulaires 28 dans lesquelles sont logées, libres de sortir partiellement vers l'intérieur ou vers l'extérieur des billes 29.

La face externe du clapet 19 présente une portion cylindrique de l'extrémité amont jusqu'à hauteur du joint annulaire 26, destinée à coulisser dans l'alésage 3a de la chambre 3. Au niveau du joint annulaire 26, ladite face externe forme alors un redan annulaire 30 dont la face amont 31 est inclinée et la face aval 32 est droite. L'inclinaison de la face amont 31 est sensiblement la même que celle de l'épaulement 6 dans la chambre 3 du corps 1. Au niveau de l'épaulement 27, la face externe du clapet 19 forme un épaulement correspondant 33, juste en amont des ouvertures 28 logeant les billes 29.

Dans sa partie cylindrique, la face externe du clapet 19 présente encore trois gorges annulaires renfermant respectivement un joint annulaire 34 près de l'extrémité amont, un joint annulaire 35 juste en amont des ouvertures 24 et un joint annulaire 36 juste en aval des ouvertures 24. Les joints 34 à 36 sont destinés à assurer l'étanchéité de chaque côté de la chambre 17 entre le clapet 19 et le corps 1, quelle que soit la position du clapet 19 dans le corps 1, de sorte que la pression du fluide arrivant dans la chambre 17 est équilibrée sur le clapet, et que ce dernier n'est soumis dans le sens axial qu'à l'action du ressort 23.

En pratique, la bague 15 est reliée au bouton poussoir 12 par l'intermédiaire d'un ressort 58. De préférence, le bouton poussoir 12 est serti dans le puits 11 du corps 1, comme le montrent les dessins. Dans une autre forme de réalisation, le bouton poussoir 12 peut être rendu solidaire de la bague 15. Sur son pourtour interne, celle-ci comporte une dent amont 37 et une dent aval 38 dans le voisinage du puits 14, et une dent intermédiaire 39 à l'opposé, c'est-à-dire dans le voisinage du bouton poussoir 12. Les dents 37 et 38 présentent des faces amont droites et des faces aval inclinées, tandis que les deux faces, aval et amont, de la dent 39 sont inclinées. D'autre part, entre les dents 37 et 38, la bague 15 est traversée par un trou ouvert sur le puits 14.

Quand le coupleur est au repos, Fig. 1, le clapet 19, sollicité par le ressort 23, est en butée contre le bord interne de l'ouverture 7 du corps 1. Les billes 29 dans les trous 28 se trouvent en face de la gorge annulaire 9, et les joints annulaires 34 et 35 se trouvent de chaque côté de la chambre 17. Par ailleurs, le bord de la face amont 31 du redan 30 du clapet est en butée sur le bord de la face aval de la dent 38 de la bague 15.

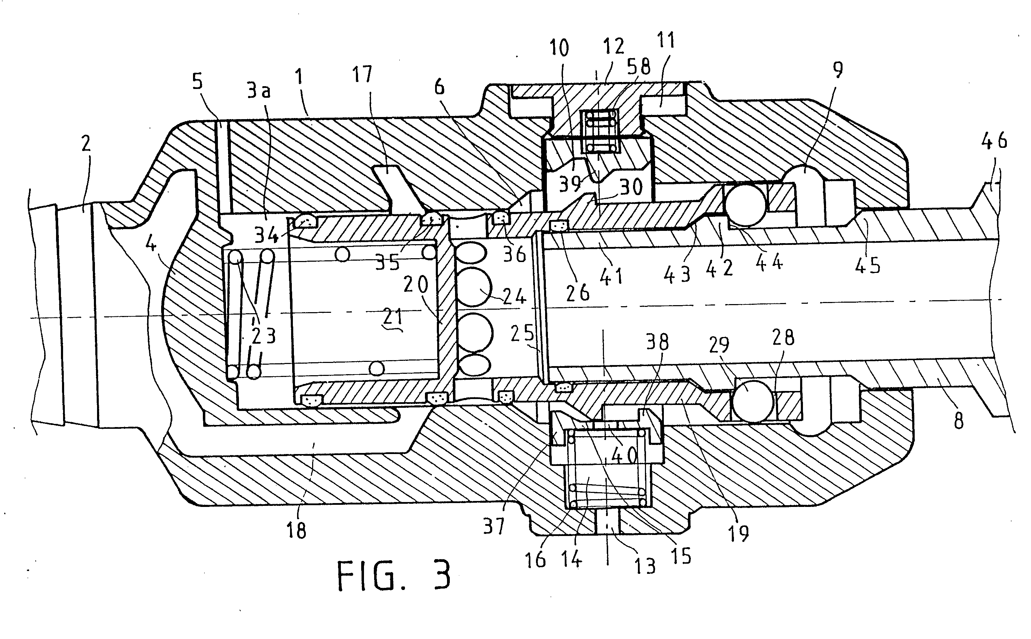

L'embout mâle 8 représenté aux Figs. 2 à 6 est un embout normalisé, généralement utilisé pour des pressions assez élevées. D'amont en aval, sa face externe forme une partie terminale cylindrique 41 de diamètre très légèrement inférieur à celui de l'intérieur du clapet entre les épaulements 25 et 27, un redan annulaire 42 dont la face amont 43 est inclinée et dont la face aval 44 est droite, de diamètre légèrement inférieur à celui de l'ouverture 7 du corps 1, un premier renflement 45 de diamètre également inférieur à celui de l'ouverture 7 et, à une certaine distance de ce dernier, un second renflement 46 de diamètre plus grand, visible aux Figs. 3 à 5.

Lorsqu'on introduit l'embout 8 dans le coupleur, sa partie terminale cylindrique 41 rentre dans la douille formée par la chambre 22 du clapet, en amont de l'épaulement 27. Le redan 42 escamote les billes 29 qui rentrent dans la gorge 9 du corps 1. Cette situation est illustrée à la Fig. 2. En enfonçant davantage l'embout 8, l'extrémité de ce dernier arrive en butée sur l'épaulement 25 du clapet, et les billes 29 sont maintenant au-delà du redan 42, susceptibles par conséquent de quitter la gorge 9. Une connexion étanche est établie entre l'intérieur du clapet et l'embout 8, par le joint 26.

Si l'on continue à pousser sur l'embout 8, celui-ci entraîne maintenant le clapet 19 en amont dans le corps 1, contre l'action du ressort 23. Les billes 29 verrouillent alors l'embout 8 dans le clapet 19, comme le montre la Fig. 3. Le redan 30 du clapet se trouve entre les dents 37 et 38 de la bague 15 qui avancent dans l'alésage 3b sous l'action du ressort 16. Les joints annulaires 34 et 35 sont toujours de chaque côté de la chambre annulaire 17 et le coupleur est donc encore fermé.

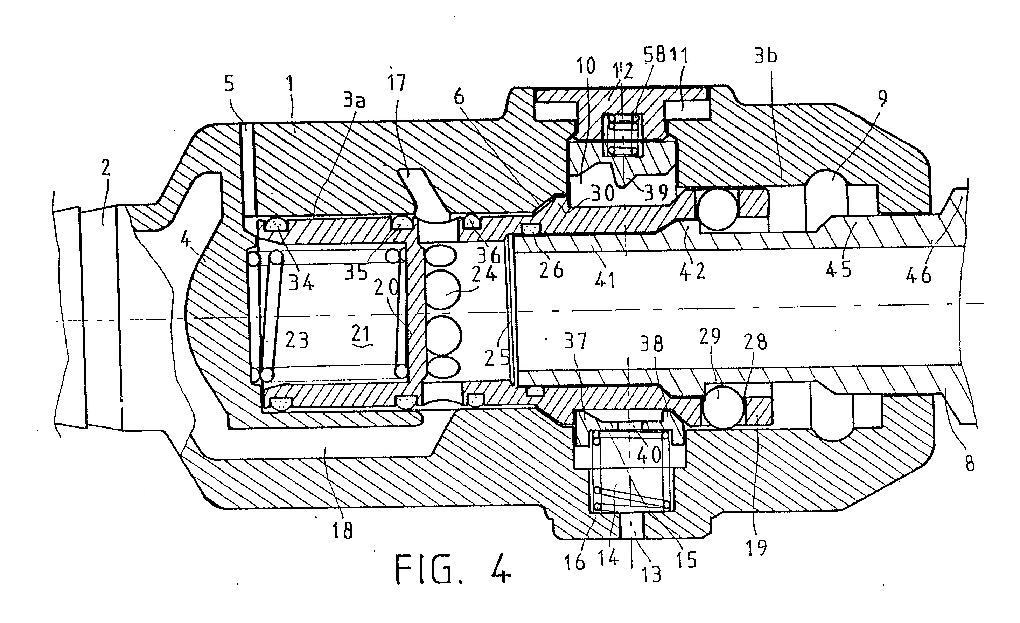

Le clapet 19 atteint sa position d'ouverture ou position amont extrême dans le corps 1 lorsque la face amont 31 de son redan 30 arrive en butée contre l'épaulement 6 dans la chambre 3, Fig. 4. Lors du passage vers cette position, le redan 30 a escamoté la dent 37 qui, sollicitée par le ressort 16, est ressortie derrière lui pour le verrouiller. Les billes 29 assurent toujours le verrouillage étanche de l'embout 8 dans le clapet 19. Dans cette position, les joints annulaires 35 et 36 se trouvent de chaque côté de la chambre annulaire 17 qui communique avec la chambre aval 22 du clapet, et par conséquent l'embout 8, par les ouvertures 24.

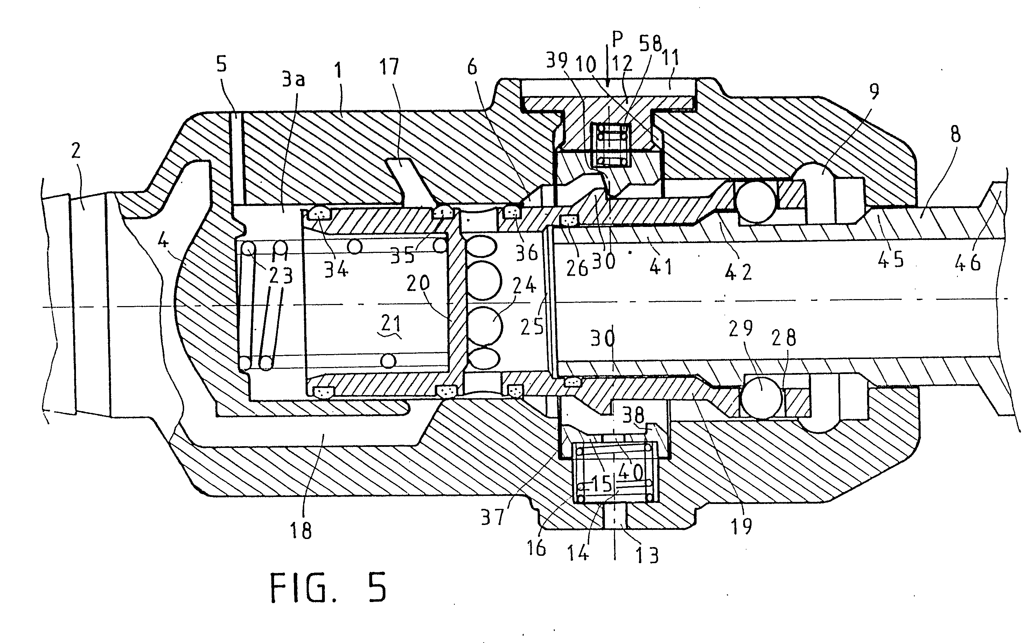

Pour déconnecter l'embout 8 du coupleur, on effectue une première poussée P, Fig. 5, sur le bouton poussoir 12, de façon à ce que la dent 37 s'efface pour libérer le redan 30 du clapet 19. Ce faisant, on rend opérationnelle la dent intermédiaire 39 sur laquelle vient buter le redan 30 libéré de la dent 37, comme le montre la Fig. 5. La course du clapet 19 entre ces deux positions est suffisante pour que la chambre annulaire 17 ne soit plus en communication par les ouvertures 24 avec la chambre aval 22 du clapet. Le coupleur est donc fermé. Cependant, la pression en aval n'est pas libérée, du fait que les joints 35 et 36 de chaque côté des ouvertures 24 sont encore en action sur la paroi de l'alésage 3a, et que la connexion étanche entre l'embout 8 et le clapet 19 est maintenue.

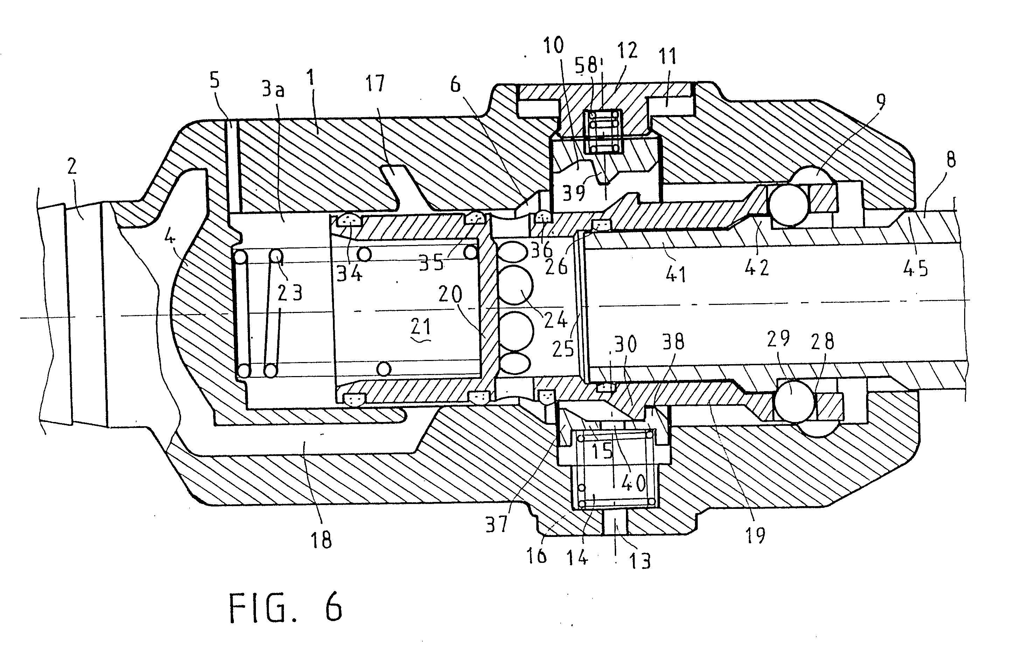

En relâchant le bouton poussoir 12, sous l'effet du ressort 16 et du redan 30 du clapet agissant sur la face amont inclinée de la dent intermédiaire 39, celle-ci s'efface et, simultanément, la dent aval 38 vient en position de verrouillage. Le redan 30 libéré de la dent intermédiaire 39 est donc à nouveau bloqué par la dent 38. Cette position est illustrée à la Fig. 6, où il apparaît clairement que le joint 36, qui a dépassé l'épaulement 6 dans la chambre 3 n'est plus opérationnel. Le fluide dans la canalisation aval peut alors s'échapper à l'air libre en passant par le trou 40 dans la bague 15, le puits 14 et l'évent 13. Dans cette position, l'embout 8 est encore verrouillé de façon étanche dans le clapet 19 par les billes 29.

Enfin, en appuyant une seconde fois sur le bouton poussoir 12, on escamote la dent aval 38 de la bague 15, de manière à libérer le redan 30 du clapet, et ce dernier, sollicité par le ressort 23, se déplace jusqu'à arriver en butée contre le bord interne de l'ouverture 7, Fig. 1. C'est seulement alors que l'on peut extraire l'embout 8 du clapet 19.

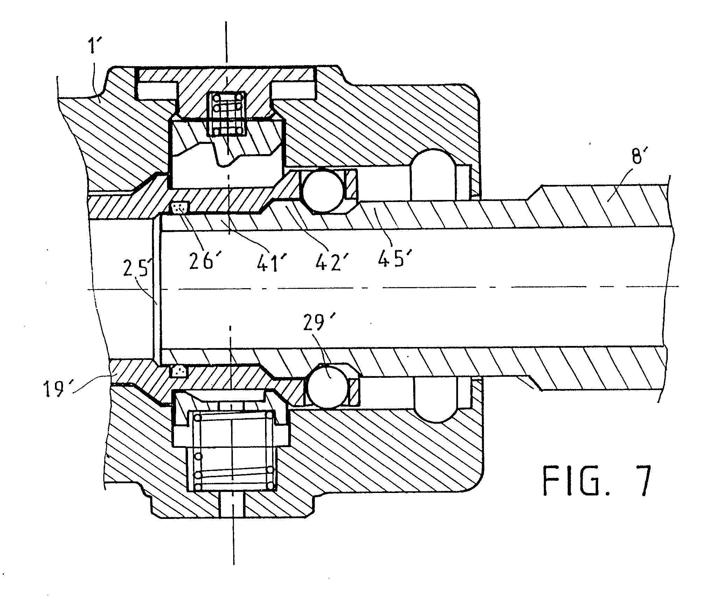

Le coupleur représenté partiellement à la Fig. 7 ne diffère du coupleur représenté aux Figs. 1 à 6 qu'en ce que les parties aval de son clapet 19' et de son corps 1' sont adaptées pour recevoir un autre embout normalisé 8', utilisé généralement pour des pressions moyennes ou faibles.

L'embout 8' diffère de l'embout 8 en ce que sa partie terminale cylindrique 41' est moins longue, ainsi que l'écartement entre son redan 42' et son premier renflement 45'. Par conséquent, dans le clapet 19' de la Fig. 7, l'épaulement 25' se trouve décalé en amont, ainsi que le joint annulaire 26', et la partie terminale du clapet au-delà des billes 29' est moins longue. La partie terminale aval du corps 1' est également raccourcie. Ce coupleur fonctionne exactement de la même façon que le coupleur des Figs. 1 à 6. La description des embouts 8 et 8' n'est évidemment pas limitative, et on comprendra que de nombreuses autres formes d'embouts peuvent être utilisées avec des coupleurs selon l'invention, pourvu que l'intérieur du clapet soit adapté en conséquence.

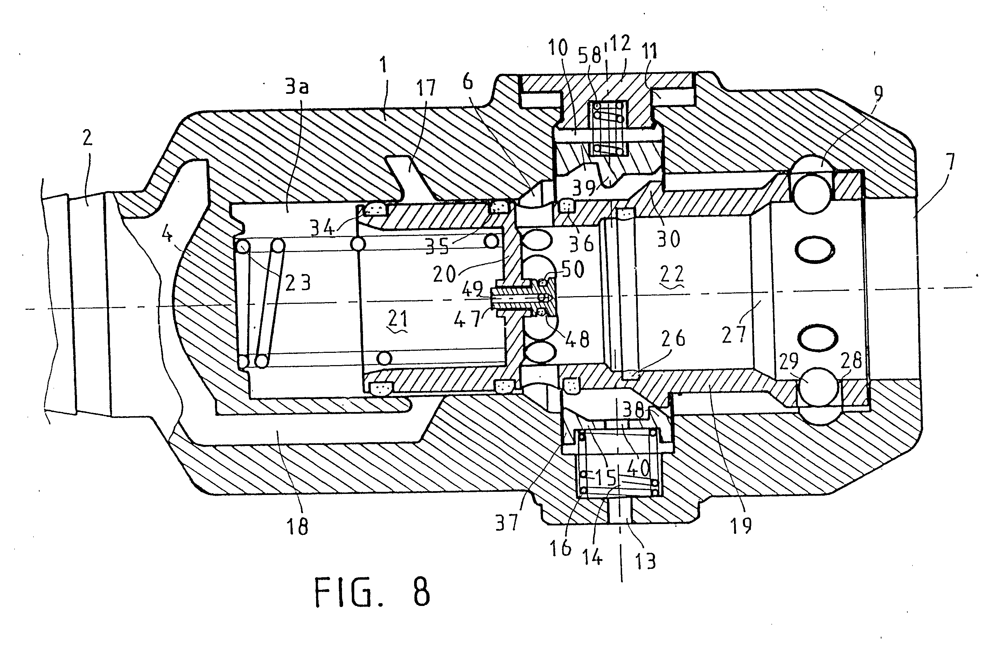

Le coupleur représenté à la Fig. 8 est pratiquement identique à celui des Figs. 1 à 6 et il fonctionne exactement de la même façon, de sorte qu'on utilisera les mêmes références numériques pour désigner les mêmes éléments. Toutefois, la cloison 20 du clapet 19 comporte un alésage central dans lequel est monté de façon étanche un noyau 47. Dans la chambre aval 22 du clapet 19, le noyau 47 présente une gorge annulaire 48 communiquant avec un alésage central 49 fermé à son extrémité aval et ouvert à son extrémité amont dans l'alésage amont 21 du clapet 19. Dans la gorge 48, est logé un joint annulaire 50 assurant l'étanchéité dans le sens aval-amont mais laissant passer le fluide dans le sens amont-aval. Le clapet de décharge formé du noyau 47 et du joint 50 permet de libérer la pression dans l'espace délimité par l'alésage amont 21 du clapet 19 et l'alésage 3a du corps du coupleur, en cas d'usure ou de défectuosité du joint annulaire 34. L'évent 5 est alors superflu. Bien entendu, le dispositif décrit ici peut aussi bien être adapté dans le coupleur de la Fig. 7.

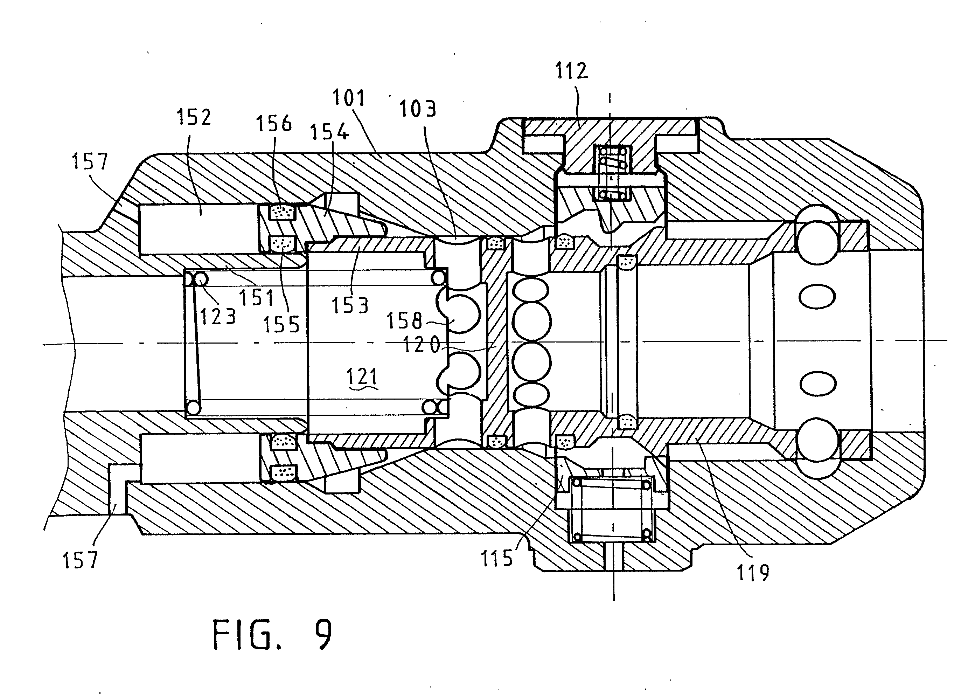

Dans le coupleur représenté à la Fig. 9, le fluide sous pression arrive axialement sur le clapet 119 coulissant dans la chambre 103, par un conduit 151 autour duquel le corps 101 forme une chambre annulaire 152. La partie amont 153 du clapet 119 est montée coulissante sur ledit conduit 151. Un anneau 154 de largeur correspondant à celle de la chambre annulaire 152, pourvu de deux joints 155 et 156, et fixé de façon étanche à l'extrémité de la partie amont 153 du clapet 119, coulisse dans la chambre annulaire 152 ouverte à l'air libre par deux évents 157. Juste en amont de sa cloison 120, la chambre amont du clapet 119 comporte une pluralité d'ouvertures périphériques 158 débouchant dans la partie de la chambre annulaire 152 en aval de l'anneau 154. La section transversale de la chambre annulaire 152 a la même surface que la cloison 120, de sorte que les forces exercées par le fluide sous pression sur la paroi 120 et l'anneau 154 sont égales et de sens opposés et, par conséquent, s'équilibrent. Dans la direction axiale, le clapet 119 n'est donc sollicité que par un ressort 123 placé entre un épaulement dans l'alésage amont 121 du clapet et un épaulement dans le conduit 151.

Par ailleurs, la partie aval du coupleur 119 et celle du corps 101, ainsi que les autres éléments tels que la bague de verrouillage 115 et son bouton poussoir 112 sont identiques aux éléments correspondants du coupleur des Figs. 1 à 6. Bien entendu, un coupleur pourvu du dispositif d'équilibrage décrit ci-dessus peut avoir, pour sa partie aval, la configuration du coupleur illustré à la Fig. 7.

Les coupleurs décrits ci-dessus peuvent être recouverts par un manchon de protection souple, non représenté.

Outre le fait d'être parfaitement fiables, ces coupleurs présentent l'avantage d'être composés d'éléments pour lesquels une standardisation est très poussée.

## Revendications

1) Coupleur automatique pour circuit de fluide sous pression, à monter sur une canalisation amont et destiné à recevoir de façon amovible un embout (8) monté sur une canalisation aval pour le raccordement desdites canalisations, dont le corps (1) renferme un clapet coulissant (19), la pression étant équilibrée sur ledit clapet (19) dans la direction axiale, de sorte que lorsque le clapet (19) se déplace dans le corps (1), il n'est sollicité que par un ressort de rappel (23), la partie aval du clapet (19) formant une douille de réception dudit embout (8), pourvue d'un moyen de verrouillage étanche de ce dernier, caractérisé en ce qu'il comporte un moyen de verrouillage du clapet (19) par rapport au corps (1) à deux positions :
- une première position ou position d'accouplement dans laquelle le clapet (19) est ouvert, et
- une seconde position dans laquelle le clapet (19) est fermé, l'embout (8) est verrouillé dans le clapet, et la douille de réception de l'embout du clapet (19) est en communication avec l'atmosphère, ledit moyen de verrouillage s'escamotant automatiquement, puis bloquant, sollicité par un ressort, le clapet (19) en position d'ouverture lors de l'insertion de l'embout (8) dans le coupleur, un moyen de libération dudit moyen de verrouillage du clapet étant prévu, qui, lorsqu'il est actionné pour libérer le clapet de la première position, rend opérationnel un moyen de verrouillage du clapet dans une position intermédiaire entre lesdites première et seconde positions, jusqu'à ce que ledit moyen de libération soit relâché et permette au moyen de verrouillage en position intermédiaire de s'escamoter en assurant par le fait même le verrouillage dans la seconde position, le moyen de libération devant être actionné une seconde fois pour que le clapet (19), sollicité par son ressort (23), puisse continuer son déplacement dans le corps (1) vers sa position de repos, l'embout (8) pouvant alors être déverrouillé du clapet (19).

2) Coupleur selon la revendication 1, caractérisé en ce que ledit moyen de verrouillage à deux positions, ledit moyen de verrouillage en position intermédiaire et ledit moyen de libération sont constitués par une bague (15) à dents (37, 38, 39) coopérant avec un redan annulaire (30) du clapet (19), logée dans une gorge annulaire (10) du corps (1) et sollicitée par un ressort de rappel (16), et un bouton poussoir (12) pour actionner la bague (15), logé dans un puits (11) débouchant dans la gorge (10).

3) Coupleur selon la revendication 2, caractérisé en ce que la bague (15) et le bouton poussoir sont réunis par l'intermédiaire d'un ressort (58), le bouton poussoir (12) étant serti dans le puits (11).

4) Coupleur selon l'une des revendications 1 3, caractérisé en ce que le verrouillage étanche de l'embout (8) dans le clapet (19) est assuré par un joint annulaire (26) dans le clapet (19) et une pluralité de billes (29) s'engageant derrière un redan annulaire (42) de l'embout (8), les billes étant bloquées derrière ledit redan (42) dès que le clapet a entamé son déplacement d'aval en amont dans le corps (1).

5) Coupleur selon l'une des revendications 1 à 4, caractérisé en ce que le moyen d'équilibrage de la pression sur le clapet dans la direction axiale consiste à faire arriver le fluide sous pression par des conduits périphériques (18) dans une chambre annulaire (17) du corps (1), l'étanchéité entre ladite chambre (17) et le clapet (19) étant établie de chaque côté de celle- ci par des joints annulaires (34, 35, 36) travaillant sur des surfaces cylindriques de même diamètre.

6) Coupleur selon l'une des revendications 1 à 4, caractérisé en ce que ledit moyen pour équilibrer la pression dans la direction axiale sur le clapet consiste à faire arriver axialement par un conduit (151) le fluide sous pression sur la cloison transversale (120) du clapet (119), et à équilibrer la force résultant de cette pression en prévoyant en amont de ladite cloison (120) un anneau (154) solidaire du clapet (19) et coulissant de façon étanche dans une chambre annulaire (152).

FIG. 1

FIG. 2

FIG. 3

FIG. 4

FIG. 5

FIG. 6

EP 0 375 581 A1

FIG. 7

FIG. 8

EP 0 375 581 A1

FIG. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 100 090 (NYBERG) <br> * Figures; page 3, ligne 13 - page 8, ligne 14 * <br> --- | 1,5 | F 16 L 37/08 <br> F 16 L 37/22 |
| A | EP-A-0 077 743 (STAUBLI) <br> * Figures; résumé * <br> ----- | 1-2 | |

DOMAINES TECHNIQUES
RECHERCHES (Int. Cl.5)

F 16 L

Le présent rapport a été établi pour toutes les revendications

| Lieu de la recherche | Date d'achèvement de la recherche | Examinateur |
|---|---|---|
| LA HAYE | 26-03-1990 | NARMINIO A. |